(19) Europäisches Patentamt
European Patent Office
Office européen des brevets

(11) **EP 2 385 909 B1**

(12) **EUROPÄISCHE PATENTSCHRIFT**

(45) Veröffentlichungstag und Bekanntmachung des Hinweises auf die Patenterteilung:
**20.02.2013  Patentblatt 2013/08**

(21) Anmeldenummer: **09799333.1**

(22) Anmeldetag: **17.12.2009**

(51) Int Cl.:
***B60L 11/18*** *(2006.01)*   ***H02J 7/02*** *(2006.01)*

(86) Internationale Anmeldenummer:
**PCT/EP2009/067406**

(87) Internationale Veröffentlichungsnummer:
**WO 2010/079074 (15.07.2010 Gazette 2010/28)**

(54) **VERFAHREN FÜR DIE STEUERUNG EINER STROMVERSORGUNGSEINRICHTUNG MIT EINEM WECHSELRICHTER**

METHOD FOR CONTROLLING A POWER SUPPLY DEVICE HAVING A POWER INVERTER

PROCÉDÉ POUR COMMANDER UN DISPOSITIF D'ALIMENTATION ÉLECTRIQUE AVEC UN ONDULEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.01.2009  DE 102009000096**

(43) Veröffentlichungstag der Anmeldung:
**16.11.2011  Patentblatt 2011/46**

(73) Patentinhaber: **Robert Bosch GmbH**
**70442 Stuttgart (DE)**

(72) Erfinder: **FASSNACHT, Jochen**
**75365 Calw (DE)**

(56) Entgegenhaltungen:
**EP-A1- 0 603 778     EP-A1- 0 849 112**
**WO-A1-2007/037240**

**Beschreibung**

Stand der Technik

Die Erfindung betrifft ein Verfahren für die Steuerung einer Stromversorgungseinrichtung mit einem Wechselrichter nach dem Oberbegriff des Anspruchs 1. Weiterhin betrifft die Erfindung eine Stromversorgungseinrichtung.

Aus DE 101 10 615 A1 ist ein Verfahren für die Erzeugung von Ansteuerimpulsen für Leistungshalbleiter, insbesondere zum Zwecke der Generierung versetzter Ansteuerungsimpulse für Halbbrücken, die an Mehrphasenumrichtern oder Gleichspannungsumrichtern aufgenommen sind, bekannt. Bei diesem Verfahren erfolgt ein Verschieben der Referenzspannung um eine den Versetzungen entsprechende Verzögerungszeit oder ein Verschieben eines PWM-Signals um eine Verzögerungszeit, die der Periodendauer geteilt durch die Anzahl der Versetzungen entspricht.

Aus DE 101 19 985 A1 ist eine Vorrichtung zur Energieeinspeisung in ein Mehrspannungsbordnetz eines Kraftfahrzeugs bekannt. Diese Vorrichtung weist ein in einem Kraftfahrzeug angeordnetes Mehrspannungsbordnetz auf, das zumindest ein erstes und ein zweites Spannungsniveau, jeweils von dem Bezugspotential verschieden, bereitstellt. Das Mehrspannungsbordnetz wird aus zumindest einem elektrischen Energiespeicher gespeist. Es weist des Weiteren zumindest einen Wandler zur Verbindung der beiden Spannungsniveaus auf. Ferner sind Einspeisemittel zur externen Energieeinspeisung in das Mehrspannungsbordnetz vorgesehen. Der genannte Wandler kann in Form eines Multiphasenwandlers realisiert sein. Bei derartigen Wandlern werden mehrere Wandlerzellen kleinerer Leistung parallel geschaltet und die Leistungsteile zeitversetzt getaktet. Hierbei werden auf Grund von Auslöschungseffekten Filterbausteine eingespart. Mit derartigen Multiphasenwandlern wird es möglich, die ersten und zweiten Wandler mit den vorhandenen Phasen eines einzigen Multiphasenwandlers zu realisieren. Hierzu werden die Phasen aufgeteilt in Wandler mit Abwärts- und Aufwärtswandlerfunktion. Die Phasen werden dann wandlerintern über einen Schalter eingangsseitig getrennt.

Aus DE 10 2007 043 603.5 ist ein Multiphasengleichspannungswandler bekannt, welcher mehrere parallel zueinander angeordnete, zeitversetzt getaktete Wandlerzellen aufweist. Dabei ist zwischen den Ausgängen jeweils zweier Wandlerzellen jeweils eine magnetische Messbrücke angeordnet.

Aus DE 696 17 026 T2 ist ein System zum Laden einer Batterie von Akkumulatoren eines Kraftfahrzeugs aus einer einphasigen Spannungsquelle bekannt, wobei das Kraftfahrzeug mit einem Drehstrom-Antriebsmotor mit drei Wicklungen und mit einem Wechselrichter mit drei Unterbrechern zur Speisung des Drehstrommotors ausgestattet ist, wobei Mittel zum Betreiben des besagten Wechselrichters als Wechsel/Gleichspannungswandler mit einer Gleichrichter-Spannungserhöhungsstufe vorgesehen sind, die einen ersten und einen zweiten Unterbrecherzweig des Wechselrichters, eine Spannungserniedrigungsstufe mit einem dritten Unterbrecherzweig des Wechselrichters und Mittel aufweist zum Anschließen des ersten und zweiten Unterbrecherzweiges an die einphasige Spannungsquelle, der Mittenanzapfung des dritten Unterbrechungszweiges an die Batterie zur Versorgung mit Gleichspannung. Bei dem System sind die Mittenanzapfungen des ersten und des zweiten Unterbrecherzweiges mit der besagten einphasigen Spannungsquelle über eine erste Induktivität verbunden, die aus mindestens einer Wicklung des Drehstrommotors besteht. Weiterhin ist die Mittenanzapfung des dritten Unterbrecherzweiges mit der Batterie über eine zweite Induktivität verbunden ist, die aus mindestens einer Wicklung des besagten Drehstrommotors besteht, welche von der oder den Wicklungen, die die erste Induktivität bilden, verschieden ist.

Ein Elektrofahrzeug oder ein so genanntes Plug-In-Hybridfahrzeug, also ein Hybridfahrzeug, dessen Batterien am Stromnetz aufgeladen werden können, hat üblicherweise mindestens einen dreiphasigen Wechselrichter zur Ansteuerung einer elektrischen Drehstrommaschine für die Traktion des Elektrofahrzeugs. Ein derartiger Wechselrichter kann auch dazu benutzt werden, um, in Zusammenwirken mit Netzdrosseln, dem Stromnetz Energie zu entnehmen oder Energie in das Stromnetz einzuspeisen. Dies ist beispielsweise auch von Aufzugsantrieben oder Krananantrieben bekannt. Hierbei wird zuerst über ein Vorladeschütz mit Widerständen der Zwischenkreis langsam auf eine Spannung kurz oberhalb der gleichgerichteten Netzspannung aufgeladen und danach wird der Wechselrichter als Hochsetzsteller eingesetzt, der den Netzdrehstrom gleichrichtet oder den Gleichstrom in dem Zwischenkreis in ein Drehstromsystem wechselrichtet. Bei den bekannten Applikationen werden die Netzströme durch den Wechselrichter anhand der Spannungsabweichung in dem Zwischenkreis von einem Sollwert und, ggf. noch anhand eines Laststroms eingestellt. Für einen Einsatz als Batterieladegerät muss jedoch eine andere Ansteuerung des Wechselrichters vorgenommen werden, da hier der Batterieladestrom die gewünschte einzustellende Größe ist und nicht die gewünschte Zwischenkreisspannung.

Aus EP 0 849 112 A1 ist außerdem ein Verfahren für die Steuerung einer Stromversorgungseinrichtung für mindestens eine elektrische Maschine gemäß Oberbegriff des Anspruchs 1 bekannt, bei welchem für den Ladebetrieb ein gewünschter Ladestrom vorgegeben wird.

Aus EP 0 603 778 A1 geht ein Verfahren für die Stromversorgung einer Drehstrommaschine hervor, mit einer Batterie und mit einem mindestens eine Drossel umfassenden Wechselrichter, wobei im Ladebetrieb die Batterie über den Wechselrichter aus einem ortsfesten Stromnetz aufgeladen wird.

Offenbarung der Erfindung

Der Erfindung liegt die Aufgabe zugrunde, ein neuartiges Verfahren für die Steuerung einer Stromversorgungseinrichtung mit einem Wechselrichter bereitzustellen.

Diese Aufgabe wird durch das in Anspruch 1 genannte Verfahren gelöst.
Die Erfindung ermöglicht eine besonders günstige Steuerung einer Stromversorgungseinrichtung mit einem Wechselrichter, die sich als kompakte und kostengünstige Baugruppe, insbesondere für mobile Anwendungen, insbesondere für einen Einsatz in einem Elektrofahrzeug, eignet. Der Wechselrichter wird dabei, in Doppelfunktion, für mindestens zwei Betriebsarten eingesetzt. In einer ersten, mobilen Betriebsart stellt der Wechselrichter die für den Fahrmotor des Elektrofahrzeugs benötigte Wechselspannung durch entsprechende Umwandlung der dem bordeigenen Energiespeicher entnommenen Gleichspannung bereit. In einer zweiten, in der Regel stationären, Betriebsart, dem Ladebetrieb, ist der Wechselrichter mit einem Stromnetz verbunden und wandelt die von diesem Netz bereitgestellte Spannung in eine für das Aufladen der bordeigenen Batterie geeignete Spannung um. In einer besonders vorteilhaften Ausführungsvariante ist zusätzlich ein zwischen den Wechselrichter und den Batteriekreis ge-schalteter Gleichspannungswandler vorgesehen. Dies erleichtert die Einstellung optimaler Ladebedingungen für die Batterie.

Weitere Vorteile ergeben sich aus den Unteransprüchen, der Beschreibung und der Zeichnung.

Ausführungsbeispiele der Erfindung werden im Folgenden unter Bezug auf die Zeichnung näher erläutert. Dabei zeigt

Figur 1     den schematischen Aufbau eines Wechselrichters als Ladegerät;

Figur 2     den Anschluss eines Wechselrichters an ein einphasiges Wechselstromnetz;

Figur 3     ein Blockdiagramm zur Erläuterung der Sollwertvorgabe für den Wechselrichter;

Figur 4     die schematische Darstellung eines Wechselrichters mit einem nachgeschalteten Gleichspannungswandler;

Figur 5     ein erstes Ausführungsbeispiel einer erfindungsgemäßen Stromversorgungseinrichtung;

Figur 6     ein zweites Ausführungsbeispiel einer erfindungsgemäß ausgebildeten Stromversorgungseinrichtung;

Figur 7     ein drittes Ausführungsbeispiel einer erfindungsgemäß ausgebildeten Stromversorgungseinrichtung.

Die vorliegende Erfindung offenbart ein Regelungskonzept, das den Betrieb eines Wechselrichters einerseits für die Versorgung eines Antriebsmotors eines Elektrofahrzeugs aus einem bordeigenen Energiespeicher und andererseits als Ladegerät für den Energiespeicher ermöglicht. Bei der Verwendung als Ladegerät ist der Wechselrichter mit drei Phasen oder zumindest mit einer Phase und dem Neutralleiter eines in der Regel ortsfesten Stromnetzes verbunden und arbeitet im Gleichrichterbetrieb, das heißt, er entnimmt dem Stromnetz Energie und lädt damit die Batterie. Die Zustands- oder Regelgrößen dieses Wechselrichters sind die Drosselströme $I_{L1}$, $I_{L2}$, $I_{L3}$, wobei der dritte Stromwert aus den beiden anderen Stromwerten ableitbar ist. Die Drosselströme entsprechen dabei den Netzströmen. Damit der Wechselrichter die Drosselströme durch die Auswahl geeigneter Spannungsvektoren einstellen kann, muss die Zwischenkreisspannung und somit die Batteriespannung größer sein als die gleichgerichtete Netzspannung. Ansonsten würde die Batterie über die Gleichrichterdioden ungeregelt geladen und es könnte dabei ein unzulässig großer Ladestrom fließen. Da das Batteriemanagementsystem des Fahrzeugs die jeweils aktuellen Kenngrößen der Batterie zur Verfügung hat und somit präzise weiß, welcher Ladestrom oder welche Ladeleistung am zweckmäßigsten sind, ist es vorteilhaft, dass das Batteriemanagementsystem den Solladestrom oder die Sollladeleistung vorgibt. Der Wechselrichter kann allerdings nur die Drosselströme direkt einstellen. Die notwendige Umrechnung des Ladestroms oder der Ladeleistung in einen entsprechenden Drosselstrom und die Vorgabe desselben an die Stromregelungseinrichtung des Wechselrichters betrifft den Kernpunkt der Erfindung.

Die Umrechnung des Ladestroms in die dreiphasigen Netzsollströme über die Leistungsbilanz lautet, bei Vorgabe des Scheitelwerts, wie folgt:

$$(1) \quad \hat{I}_{L\_Soll} = 2 \cdot \frac{U_{Batt} \cdot I_{Batt\_Soll}}{\sqrt{3} \cdot \hat{U}_{Netz}},$$

mit

$I_{L\_Soll}$ = Drosselsollstrom, Scheitelwert
$U_{Batt}$ = Batteriespannung
$I_{Batt\_Soll}$ = Batteriestrom, Sollwert.

Bei der erfindungsgemäßen Verwendung der Sollladeleistung ergibt sich die folgende Beziehung:

$$(2) \quad \hat{I}_{L\_Soll} = 2 \cdot \frac{P_{Batt\_Soll}}{\sqrt{3} \cdot \hat{U}_{Netz}},$$

mit

$I_{L\text{-}Soll}$ =      Drosselsollstrom, Scheitelwert
$P_{Batt\_Soll}$ =      Sollladeleistung.

Die Scheitelwerte in die aktuellen netzsynchronisierten Stromsollwerte umgerechnet ergeben:

$$(3) \quad \hat{I}_{L1\_Soll} = \hat{I}_{L\_Soll} \cdot \sin(\omega t);$$

$$(4) \quad \hat{I}_{L2\_Soll} = \hat{I}_{L\_Soll} \cdot \sin(\omega t + 120°);$$

$$(5) \quad \hat{I}_{L3\_Soll} = \hat{I}_{L\_Soll} \cdot \sin(\omega t + 240°).$$

Der Phasenwinkel ergibt sich durch die Synchronisation auf das Stromnetz, an das die Stromversorgungseinrichtung für den Ladebetrieb angeschlossen ist. Falls nur ein Einphasennetz zur Ladung verwendet wird, so ist diese Erfindung ebenfalls einsetzbar. Es ergeben sich dann folgende Formeln:

$$(6) \quad \hat{I}_{L\_Soll} = 2 \cdot \frac{U_{Batt} \cdot I_{Batt\_Soll}}{\hat{U}_{Netz}}$$

$$(7) \quad \hat{I}_{L\_Soll} = 2 \cdot \frac{P_{Batt\_Soll}}{\hat{U}_{Netz}}$$

$$(8) \quad \hat{I}_{L\_Soll} = \hat{I}_{L\_Soll} \cdot \sin(\omega t).$$

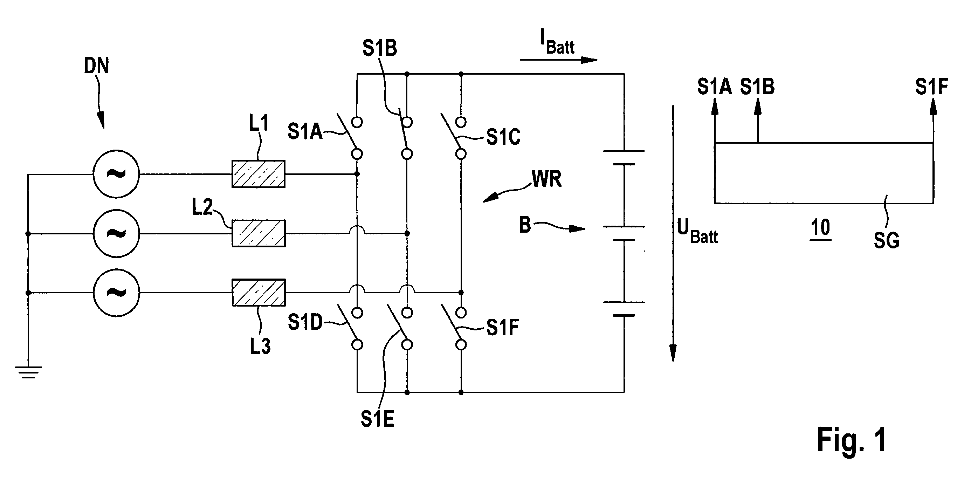

Figur 1 zeigt, in einer schematischen Darstellung, den Einsatz eines Wechselrichters als Ladegerät für eine Batterie. Die in Figur 1 dargestellte Schaltungsanordnung 10 umfasst eine Batterie B, die zwecks Aufladung über einen Wechselrichter WR mit einem schematisch dargestellten Drehstromnetz DN verbunden ist. Der Wechselrichter WR umfasst drei Zweige mit jeweils zwei in Serie geschalteten Schaltelementen S1A, S1D, S1B, S1E und S1C, S1F. Die Schaltelemente sind mit einem Steuergerät SG verbunden und von diesem steuerbar. Jeder Verbindungspunkt der Schaltelemente in jedem der drei Zweige des Wechselrichters WR ist mit einem ersten Anschluss einer Drossel L1, L2, L3 verbunden. Der jeweils andere Anschluss der Drossel L1, L2, L3 ist mit einer Phase des Drehstromnetzes DN verbunden. Durch Steuerung der Schaltelemente S1A, S1 D, S1 B, S1 E und S1 C, S1 F mittels des Steuergeräts SG stellt sich in dem Zwischenkreis eine Spannung $U_{ZK}$ ein, die einen Stromfluss $I_{Batt}$ durch die Batterie B bewirkt und diese dadurch auflädt. Durch eine geeignete Steuerung der Schaltelemente des Wechselrichters (ein Ventil besteht typischerweise aus einem Transistor mit einer antiparallel geschalteten Diode) kann ein dreiphasiges Drehstromsystem in $IL_1$, $IL_2$, $IL_3$ erzeugt werden. Zur Bildung des Schaltmusters für die Transistoren ist ein Stromsollwert für jede Phase nötig, der gemäß (3), (4) und (5) berechnet wird. Dieser Sollwert wird von einer unterlegten Stromregelung für jede Phase eingestellt. Der Ausgangswert der unterlegten Stromregelung ist wiederum ein Spannungssollwert für jede Phase, welcher beispielsweise über ein PWM-Verfahren (Pulsweitenmodulationsverfahren) oder ein ähnliches Modulationsverfahren durch Vorgabe eines geeigneten Schaltmusters für die Schaltelemente eingestellt wird.

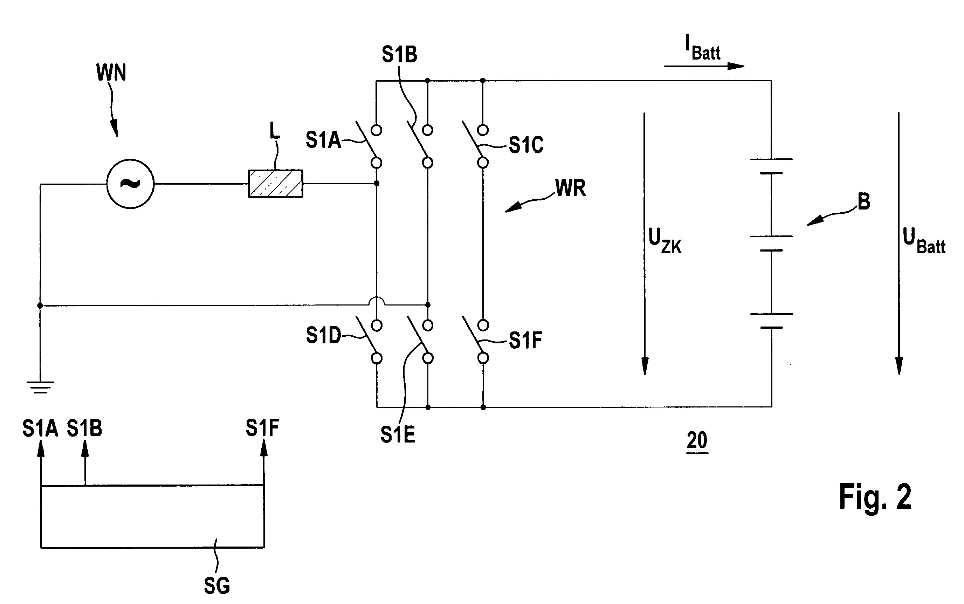

Figur 2 zeigt, in einer schematischen Darstellung, den Einsatz eines Wechselrichters als Ladegerät für eine Batterie bei Anschluss an ein Wechselstromnetz WN. Die in Figur 2 dargestellte Schaltungsanordnung 20 umfasst eine Batterie B, die zwecks Aufladung über einen Wechselrichter WR mit einem schematisch dargestellten Wechselstromnetz WN verbunden ist. Der Wechselrichter WR umfasst drei Zweige mit jeweils zwei in Serie geschalteten Schaltelementen S1A, S1D, S1 B, S1 E und S1 C, S1 F. Die Schaltelemente sind mit einem Steuergerät SG verbunden und von diesem steuerbar. Der Verbindungspunkt der Schaltelemente S1A, S1D in einem ersten Zweig des Wechselrichters WR ist mit einem ersten Anschluss einer Drossel L verbunden, deren zweiter Anschluss an einer Phasenleitung des Wechselstromnetzes WN liegt. Der Verbindungspunkt der Schaltelemente S1B, S1E in einem zweiten Zweig des Wechselrichters WR ist mit dem Nullleiter des Wechselstromnetzes WN verbunden. Durch Steuerung der Schaltelemente S1A, S1D, S1 B, S1 E und S1C, S1 F mittels des Steuergeräts SG stellt sich in dem Zwischenkreis eine Spannung $U_{ZK}$ ein, die zu einem Batteriestrom $I_{Batt}$ führt, der die Batterie B auflädt. Die Funktionsweise der in Figur 2 dargestellten Schaltungsanordnung ist im Wesentlichen analog zu der in Figur 1 dargestellten Schaltungsanordnung, mit dem Unterschied, dass nur zwei Halbbrücken des Wechselrichters angesteuert werden. Die Halbbrücke mit den Schaltelementen S1 C und S1 F bleibt gesperrt. Der Sollwert der unterlegten Regelung des Spulenstroms (für den Strom durch die Spule L) wird durch die Formel (8) gebildet. Die unterlegte Regelung des Stroms der Drossel L gibt ihrerseits einen Spannungssollwert an eine Pulsweitenmodulation oder Ähnliches aus. Die Pulsweitenmodulation generiert Steuersignale für die Schaltelemente derart, dass im Mittel die Sollspannung anliegt und somit der gewünschte Strom durch die Drossel L fließt.

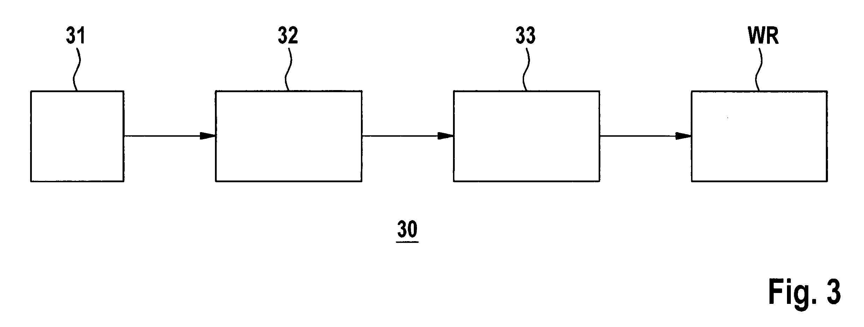

Figur 3 zeigt ein Blockdiagramm 30 zur Erläuterung der Sollwertvorgabe. Dargestellt ist ein erstes Funktionsmodul 31, das beispielsweise einen Sollladestrom vorgibt. Das erste Funktionsmodul 31 ist mit einem zweiten Funktionsmodul 32 verbunden, das den vorgegebenen Sollladestrom in Sollnetzströme umsetzt. Das zweite Funktionsmodul 32 ist mit einem dritten Funktionsmodul 33 verbunden, das seinerseits mit einem Wechselrichter WR verbunden ist und eine Netzstromregelung des Wechselrichters WR bewirkt. Das Funktionsmodul 31 gibt einen Solladewert (Batteriestrom oder Leistung) vor, den es zum Beispiel anhand der gewünschten Ladedauer, der Ladungsmenge oder der möglichen Ladeleistung berechnet. Aus diesem Wert berechnet das Funktionsmodul 32 in jedem Zeitpunkt den Spulen- bzw. Netzsollstrom. Dieser Strom wird dann von der unterlegten Stromregelung (Funktionsmodul 33) und einem entsprechenden Modulationsverfahren (zum Beispiel PWM) eingestellt. Hierzu werden entsprechende Steuersignale für die Schaltelemente des Wechselrichters gebildet und an diese weitergegeben.

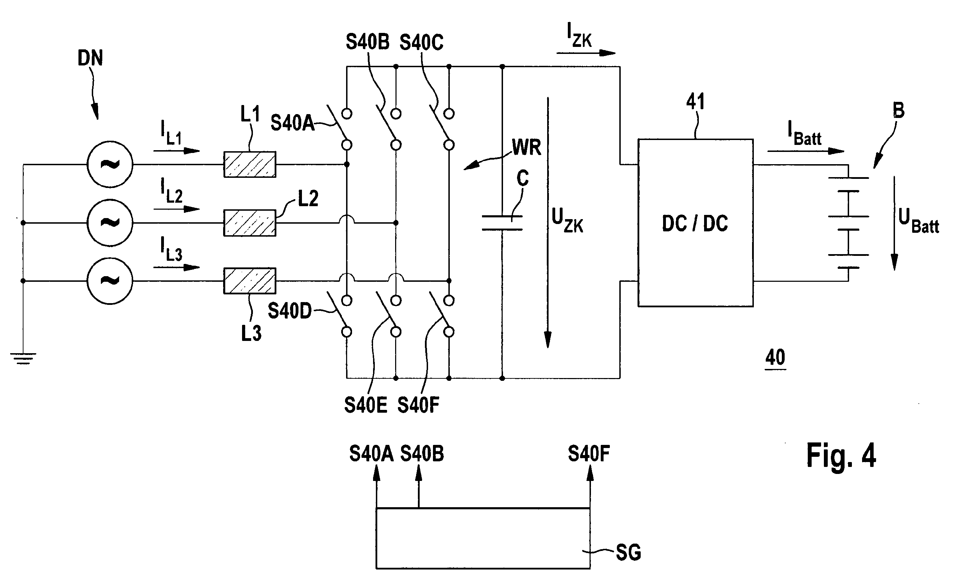

Figur 4 zeigt eine Schaltungsanordnung 40 mit einem zusätzlichen Gleichspannungswandler 41 zwischen einem Wechselrichter WR und einer Batterie B. Der Wechselrichter WR umfasst drei Zweige mit jeweils zwei in Serie geschalteten Schaltelementen S40A, S40B, S40C, S40D, S40E, S40F. Die genannten Schaltelemente sind mit einem Steuergerät SG verbunden und von diesem steuerbar. Jeder Zweig des Wechselrichters WR ist über je eine Drossel L1, L2, L3 mit einer Phasenleitung eines Drehstromnetzes DN verbunden. In einem Zwischenkreis ist ein Kondensator C angeordnet, an dem sich, durch Steuerung der genannten Schaltelemente eine Spannung $U_{ZK}$ einstellt. Diese Spannung $U_{ZK}$ wird dem Gleichspannungswandler 41 zugeführt, der batterieseitig eine für die Ladung der Batterie B passende Spannung bereitstellt. Diese führt zu einem Ladestrom $I_{Batt}$, der die Batterie B auflädt. Hier bietet es sich an, dem Gleichspannungswandler 41 eine Sollladeleistung oder einen Sollladestrom aufzuprägen, die beispielsweise von dem Funktionsmodul 31 (Figur 3) vorgegeben werden. Das Funktionsmodul 31 kann vorteilhaft eine Schaltungsanordnung sein, die auch ein Management der Batterie B bewirkt. Der mit dem Netz DN verbundene Wechselrichter WR wird zur Konstantregelung der Spannung $U_{ZK}$ verwendet. Auf der erfinderischen Überlegung basiert jetzt die Vorgabe von Leistung oder Strom als Sollwert für den Gleichspannungswandler 41. Diese Ausführungsvariante bietet Vorteile, falls die gleichgerichtete Netzspannung größer ist als die Batteriespannung.

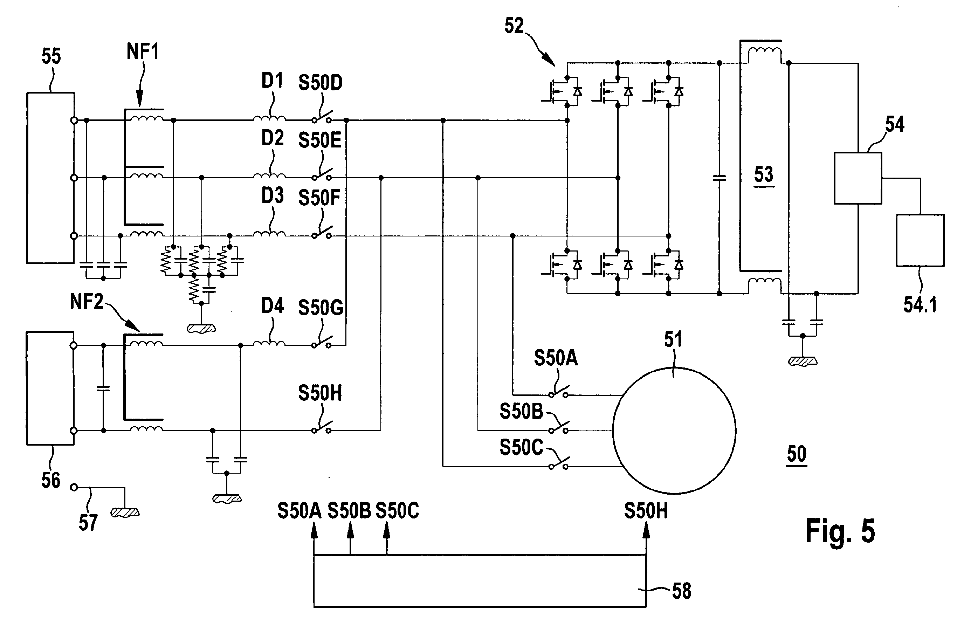

Die in Figur 5 dargestellte Schaltungsanordnung 50 zeigt eine kostengünstige Ausführungsvariante eines in Doppelfunktion verwendeten Wechselrichters. Einsparungen ergeben sich wiederum dadurch, dass ein Ladegerät für die Batterie und ein Wechselrichter für die Traktion des Fahrzeugs kombiniert werden, um Kosten für Komponenten zu sparen. Die Schaltungsanordnung 50 umfasst eine elektrische Maschine 51 und einen Wechselrichter 52. Zwischen der elektrischen Maschine 51 und dem Wechselrichter 52 sind Schaltelemente S50A, S50B, S50C angeordnet. Je nach Schaltlage dieser Schaltelemente ist die elektrische Maschine 51 mit dem Wechselrichter 52 verbunden oder von diesem getrennt. Über einen EMV-Filter 53 ist der Wechselrichter 52 mit dem Bordnetz 54 verbunden. Die Schaltungsanordnung 50 umfasst weiterhin Schaltelemente 50D, 50E, 50F, über die der Wechselrichter 52 wahlweise mit einem Drehstromnetz 55 verbindbar ist. In die Zuleitungen zu dem Drehstromnetz 55 sind noch Netzdrosseln D1, D2, D3 und ein Netzfilter NF1 geschaltet. Im Interesse einer universellen und flexiblen Energieversorgung des Elektrofahrzeugs kann der Wechselrichter wahlweise auch mit einem 1-phasigen Wechselstromnetz 56 verbunden werden. Dazu sind zwischen dem Wechselrichter 52 und den Zuleitungen zu dem Wechselstromnetz 56 Schaltelemente 50G und 50H vorgesehen. Weiterhin sind in dem Stromweg zwischen dem Wechselstromnetz 56 und dem Wechselrichter 52 noch ein Netzfilter NF2 und eine Netzdrossel D4 angeordnet. Mit Bezugsziffer 57 ist die Erdungsleitung bezeichnet, die mit der Erde der Stromnetze 55, 56 verbindbar ist. Die Schaltelemente 50A, 50B, 50C, 50D, 50E, 50F, 50G, 50H sind über ein Steuergerät 58 steuerbar, das mit den Schaltelementen in elektrischer Wirkverbindung steht.

Im Folgenden wird die Funktionsweise der in Figur 5 dargestellten Schaltungsanordnung kurz beschrieben. Dabei kann, im Wesentlichen zwischen zwei Betriebsarten des Elektrofahrzeugs unterschieden werden. Nämlich dem autonomen Fahrbetrieb einerseits und dem Ladebetrieb andererseits. Autonomer Fahrbetrieb bedeutet, dass das Elektrofahrzeug lediglich aus bordeigenen Quellen, insbesondere aus mindestens einer Batterie, mit Energie versorgt wird. In dem Ladebetrieb ist das Elektrofahrzeug mit einem ortsfesten Stromnetz verbunden, so dass die bordeigene Batterie aufgeladen werden kann. Im Fahrbetrieb des Elektrofahrzeugs, in dem keine elektrische Verbindung zu einem ortsfesten Stromnetz besteht, sind die Schaltelemente 50, 50B, 50C, gemäß entsprechender Steuerung durch das Steuergerät 58, geschlossen. Die Schaltelemente 50D, 50E, 50F, 50G, 50H sind dagegen geöffnet. Demzufolge ist die elektrische Maschine 51 des Elektrofahrzeugs mit dem Wechselrichter 52 verbunden und wird von diesem mit Betriebsstrom versorgt. Der Wechselrichter bezieht die dafür erforderliche Energie aus einer Batterie 54.1, die Bestandteil des Bordnetzes 54 ist. In dem Ladebetrieb sind dagegen die Schaltelemente 50A, 50B, 50C geöffnet, so dass keine stromleitende Verbindung zwischen der elektrischen Maschine 51 und dem Wechselrichter 52 besteht. Die Schaltlage der Schaltelemente 50D, 50E, 50F bzw. 50G, 50H hängt davon ab, ob für den Ladebetrieb ein Drehstromnetz 55 oder ein einfaches Wechselstromnetz 56 zur Verfügung steht. Bei Anschluss an ein ortsfestes Drehstromnetz 55 sind die Schaltelemente 50D, 50E, 50F geschlossen, wobei diese Schaltlage wiederum von dem Steuergerät 58 gesteuert wird. Der Wechselrichter 52 ist somit über die drei Phasenleitungen und den Nullleiter 57 mit dem Drehstromnetz 55 verbunden. Falls nur ein ortsfestes 1-phasiges Wechselstromnetz für einen Aufladevorgang zur Verfügung steht, sind die Schaltelemente 50G, 50H, gesteuert von dem Steuergerät 58, geschlossen. Der Wechselrichter ist dann mit dem Wechselstromnetz 56 verbunden. Falls das Fahrzeug im normalen Fahrbetrieb arbeitet, so ist die als Motor vorgesehene elektrische Maschine mit dem Wechselrichter verbunden, der den erforderlichen Motorstrom einstellt.

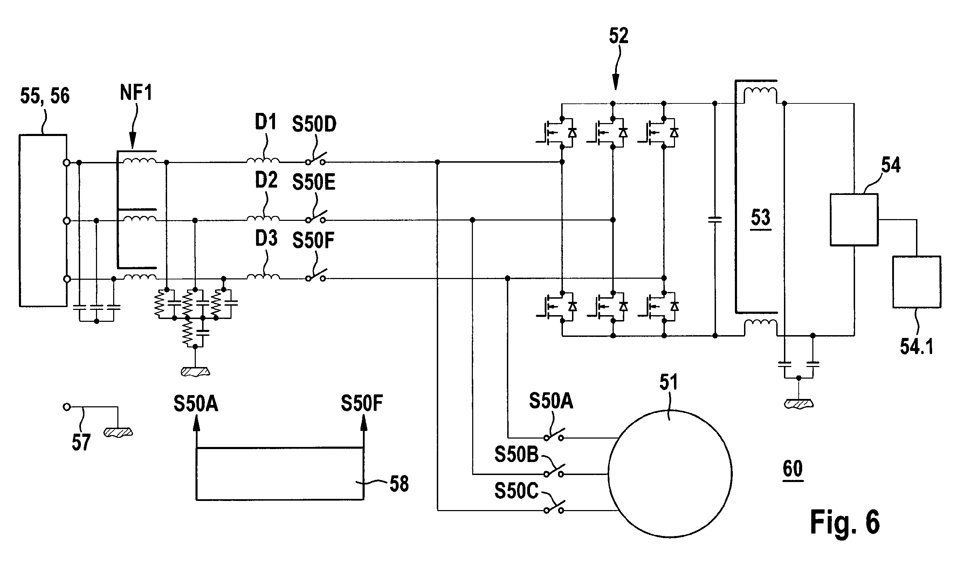

Figur 6 zeigt eine Ausführungsvariante, bei der ein Einphasennetzanschluss in den dreiphasigen Netzanschluss integriert ist, wodurch sich, durch Einsparung von Bauelementen, die Kosten reduzieren lassen. Die in Figur 6 dargestellte Schaltungsanordnung 60 umfasst eine elektrische Maschine 51, die über drei Phasenleitungen mit einem Wechselrichter 52 verbunden ist. Der Wechselrichter 52 ist über einen EMV-Filter mit dem Bordnetz 54 verbunden. Das Bordnetz 54 umfasst mindestens eine Batterie 54.1 für die Energiespeicherung. In den Verbindungsleitungen zwischen der elektrischen Maschine 51 und dem Wechselrichter 52 sind Schaltelemente S50A, S50B, S50C angeordnet, die von einem Steuergerät 58 steuerbar sind. Weiterhin ist der Wechselrichter 52 über eine Anschlusseinrichtung mit einem Stromnetz verbindbar. Die Anschlusseinrichtung umfasst einen Netzfilter NF1 und, in jeder Verbindungsleitung, je eine Drossel D1, D2, D3 sowie ein Schaltelement S50D, S50E, S50F. Die Schaltlage der vorgenannten Schaltelemente ist ebenfalls über das Steuergerät 58 steuerbar. Im Folgenden wird die Funktionsweise dieser Ausführungsvariante kurz erläutert. Dabei werden zwei Betriebszustände betrachtet. In dem ersten Betriebszustand, dem Fahrbetrieb, wird die für den Betrieb der elektrischen Maschine 51 erforderliche Energie aus einem bordeigenen Energiespeicher, nämlich der mindestens einen Batterie 54.1, entnommen. Die der Batterie 54.1 entnommene Gleichspannung wird dabei durch den Wechselrichter 52 in eine für die elektrische Maschine 51 geeignete Wechselspannung umgesetzt und dieser über die zu diesem Zweck geschlossenen Verbindungsleitungen zugeführt. Die Schaltelemente S50A, S50B, S50C sind folglich durch das Steuergerät 58 in eine geschlossene Schaltlage gesteuert. In der zweiten Betriebsart, dem Ladebetrieb, sind die Schaltelemente S50A, S50B, S50C geöffnet und die Schaltelemente S50ED, S50E, S50F geschlossen. Der Wechselrichter 52 ist somit über die geschlossenen Schaltelemente S50D, S50E, S50F und die Drosseln D1, D2, D3 und dem Nullleiter 57 dreiphasig mit einem Drehstromnetz 55 verbunden. Alternativ kann eine Verbindung zu einem 1-phasigen Wechselstromnetz 56 hergestellt werden.

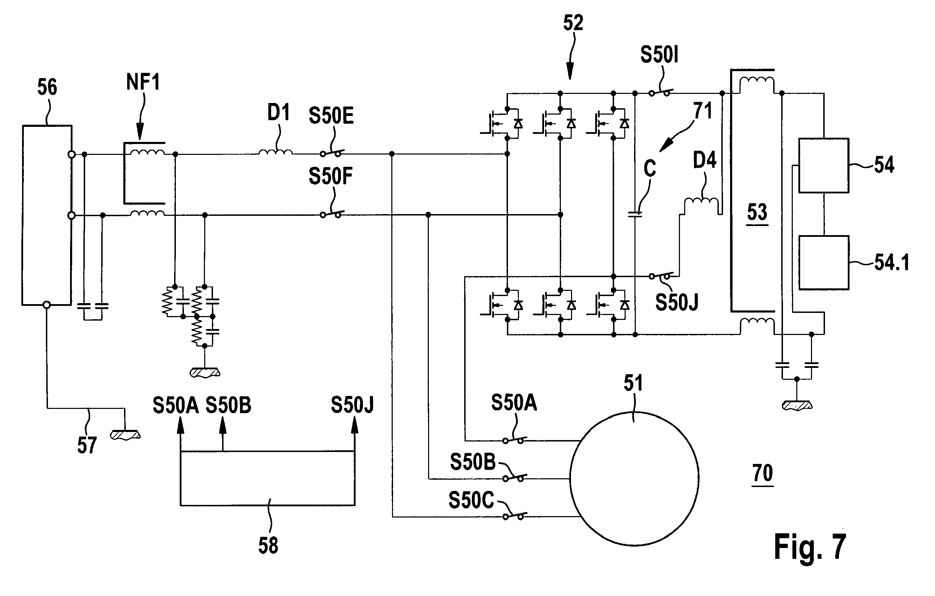

Figur 7 zeigt eine Ausführungsvariante, die besonders vorteilhaft für einen Anschluss an ein Wechselstromnetz 56 während eines Ladevorgangs ist. Die in Figur 7 dargestellte Schaltungsanordnung 70 umfasst wiederum eine elektrische Maschine 51 und einen dieser Maschine 51 zugeordneten Wechselrichter 52. Der Wechselrichter 52 ist über einen EMV-Filter 53 mit dem Bordnetz 54 verbunden. Das Bordnetz 54 umfasst mindestens eine Batterie 54.1 als Energiespeicher. Weiterhin umfasst die Schaltungsanordnung 70 eine Anschlusseinrichtung, die einen Anschluss des Wechselrichters 52 an ein Wechselstromnetz 56 bei einem Ladevorgang ermöglicht. Die Anschlusseinrichtung umfasst einen Netzfilter NF1, mindestens eine Netzdrossel D1, sowie zwei Schaltelemente S50E und S50F. Drei weitere Schaltelemente S50A, S50B, S50C sind in den Versorgungsleitungen zwischen dem Wechselrichter 52 und der elektrischen Maschine 51 angeordnet. Weiterhin sind zwei Schaltelemente S50I und S50J in Verbindungsleitungen zwischen dem Wechselrichter und dem EMV-Filter 53 angeordnet. In Serie zu dem Schaltelement S50J ist eine Drossel D4 geschaltet. Für die Steuerung der genannten Schaltelemente ist ein Steuergerät 58 vorgesehen. Auch bei dieser Schaltungsanordnung 70 lassen sich zwei Betriebsarten unterscheiden. In der ersten Betriebsart, dem Fahrbetrieb, ist die elektrische Maschine 51 dreiphasig mit dem Wechselrichter 52 verbunden. Dazu sind die Schaltelemente S50A, S50B, S50C geschlossen. Weiterhin ist das Schaltelement S50I geschlossen und das Schaltelement S50J offen. Auch die Schaltelemente S50E und S50F sind in dieser Betriebsart offen. In diesem Fahrtbetrieb entnimmt der Wechselrichter 52 Energie in Form von Gleichstrom aus der Batterie 54.1 und wandelt ihn in Wechselstrom für die elektrische Maschine 51 um. In der zweiten Betriebsart, dem Ladebetrieb, ist der Wechselrichter 52 mit einem ortsfesten Wechselstromnetz 56 verbunden. Dazu sind die Schaltlagen der Schaltelemente durch das Steuergerät 58 wie folgt gesteuert. Die Schaltelemente S50E, S50F und S50J sind geschlossen, während die Schaltelemente S50A, S50B S50C und S50I geöffnet sind. In dieser Betriebsart sind auf diese Weise zwei Halbbrücken des Wechselrichters 52 mit einer Phase und dem Neutralleiter des Wechselstromnetzes 56 verbunden und werden zum Gleichrichten und Hochsetzstellen der dem Wechselstromnetz 56 entnommenen Netzspannung benutzt. Die dritte Halbbrücke des Wechselrichters 52 fungiert, in Zusammenwirken mit einer Drossel 4, als Gleichspannungswandler. Im Fahrbetrieb, also bei Versorgung der elektrischen Maschine 51 über den Wechselrichter 52, ist die Spannung in dem Zwischenkreis, also die Spannung an der Zwischenkreiskapazität C, im Wesentlichen gleich der Spannung des Bordnetzes 54. Im Ladebetrieb kann, im Vergleich dazu, die Spannung in dem Zwischenkreis höher sein als die Spannung des Bordnetzes 54. Dies ermöglicht eine flexible Anpassung der Spannung des Zwischenkreises an unterschiedliche Netzspannungen.

**Patentansprüche**

1. Verfahren für die Steuerung einer Stromversorgungseinrichtung für mindestens eine elektrische Maschine (51), mit mindestens einer Speichereinrichtung für elektrische Energie (Batterie 54.1) und mit einem mindestens eine Drossel (Induktivität L) umfassenden Wechselrichter (52), wobei der Wechselrichter (52) in Doppelfunktion für die Ladung (Ladebetrieb) der Speichereinrichtung (Batterie 54.1) aus einem insbesondere ortsfesten Stromnetz (55,56), nämlich ein Wechselstromnetz (WN) oder ein Drehstromnetz (DN), mit welchem der Wechselrichter über die mindestens eine Drossel verbunden ist, und für die Versorgung einer elektrischen Maschine (51) im Fahrbetrieb mit Wechselstrom vorgesehen ist, und wobei für den Ladebetrieb eine Sollladeleistung vorgegeben wird, **dadurch gekennzeichnet, dass** der Wechselrichter (52) den Drosselstrom für einen dreiphasigen Betrieb gemäß folgender Beziehung

$$\hat{I}_{L\_Soll} = 2 * \frac{P_{Batt\_Soll}}{\sqrt{3} * \hat{U}_{Netz}}$$

und für einen einphasigen Betrieb gemäß folgender Beziehung

$$\hat{I}_{L\_Soll} = 2 * \frac{P_{Batt\_Soll}}{\hat{U}_{Netz}}$$

Einstellt, mit

    $P_{Batt\_Soll}$ = Sollladeleistung
    $I_{L\_Soll}$ = Scheitelwert des Netzsollstroms; Drosselstrom.

2. Verfahren nach Anspruch 1, **dadurch gekennzeichnet, dass** für den Ladebetrieb ein Sollstrom vorgegeben wird und dass der Wechselrichter den Drosselstrom für einen dreiphasigen Betrieb gemäß der folgenden Beziehung

$$\hat{I}_{L\_Soll} = 2 \cdot \frac{U_{Batt} \cdot I_{Batt\_Soll}}{\sqrt{3} \cdot \hat{U}_{Netz}},$$

und für einen einphasigen Betrieb gemäß der folgenden Beziehung

$$\hat{I}_{L\_Soll} = 2 \cdot \frac{U_{Batt} \cdot I_{Batt\_Soll}}{\hat{U}_{Netz}},$$

einstellt, mit

    $\hat{I}_{L\_Soll}$ = Drosselsollstrom
    $U_{Batt}$ = Batteriespannung
    $I_{Batt\_Soll}$ = Batteriesollladestrom

3. Stromversorgungseinrichtung für die Durchführung des Verfahrens nach Anspruch 1, **dadurch gekennzeichnet, dass** die Stromversorgungseinrichtung eine Anschlusseinrichtung für die Verbindung der Stromversorgungseinrichtung mit einem Stromnetz (55, 56) und Schaltelemente (S50A, S50B, S50C, S50D, S50E, S50F, S50G, S50H, S50I, S50J) umfasst, die in einer ersten Betriebsart (Fahrbetrieb) den Wechselrichter (52) mit der elektrischen Maschine (51) und in einer zweiten Betriebsart (Ladebetrieb) den Wechselrichter (52) über die Anschlusseinrichtung mit dem Stromnetz (55, 56) verbinden.

4. Stromversorgungseinrichtung nach einem der vorhergehenden Ansprüche, **dadurch gekennzeichnet, dass** sie ein Steuergerät (58) für die Steuerung der Schaltelemente (S50A, S50B, S50C, S50D, S50E, S50F, S50G, S50H, S50I, S50J) umfasst.

5. Stromversorgungseinrichtung nach einem der vorhergehenden Ansprüche, **dadurch gekennzeichnet, dass** die Anschlusseinrichtung wahlweise einen Anschluss der Stromversorgungseinrichtung an ein Drehstromnetz (55) oder ein Wechselstromnetz (56) ermöglicht.

6. Stromversorgungseinrichtung nach einem der vorhergehenden Ansprüche, **dadurch gekennzeichnet, dass** eine Drossel (D4) vorgesehen ist, die zusammen mit einer Halbbrücke des Wechselrichters (52) einen Gleichspannungswandler (71) bildet, der zwischen den Wechselrichter (52) und die Speichereinrichtung (54.1) geschaltet ist.

7. Stromversorgungseinrichtung nach einem der vorhergehenden Ansprüche, **dadurch gekennzeichnet, dass** die Stromversorgungseinrichtung ein Schaltelement (S50J) umfasst, das im Fahrbetrieb geöffnet ist und dass im Ladebetrieb geschlossen wird, um die Drossel (D4) mit einer Halbbrücke des Wechselrichters (52) zu verbinden.

8. Stromversorgungseinrichtung nach einem der vorhergehenden Ansprüche, **dadurch gekennzeichnet, dass** ein Schaltelement (S50I) in einer Verbindungsleitung zwischen dem Wechselrichter (52) und einem EMV-Filter (53) vorgesehen ist, wobei das Schaltelement in dem Fahrbetrieb geschlossen und in dem Ladebetrieb geöffnet ist.

**9.** Verwendung der Stromversorgungseinrichtung nach einem der vorhergehenden Ansprüche in einem Elektrofahrzeug.

**Claims**

**1.** Method for controlling a power supply device for at least one electrical machine (51), having at least one storage device for electrical energy (battery 54.1) and having an inverter (52) which comprises at least one choke (inductance L), with the inverter (52) being provided with a dual function for charging (charging mode) the storage device (battery 54.1) from an, in particular stationary, power supply system (55, 56), specifically an AC power supply system (WN) or a three-phase power supply system (DN), to which the inverter is connected by means of the at least one choke, and for supplying alternating current to an electrical machine (51) in the driving mode, and with a setpoint charging power being prespecified for the charging mode, **characterized in that** the inverter (52) sets the choke current for a three-phase mode in accordance with the following equation

$$\widehat{I}_{L\_set} = 2 * \frac{P_{batt\_set}}{\sqrt{3 * \widehat{U}_{ss}}}$$

and for a single-phase mode in accordance with the following equation

$$\widehat{I}_{L\_set} = 2 * \frac{P_{batt\_set}}{\widehat{U}_{ss}}$$

where

P_{batt\_set} = setpoint charging power
$I_{L\_set}$ = peak value of the supply system setpoint current; choke current.

**2.** Method according to Claim 1, **characterized in that** a setpoint current is prespecified for the charging mode, and **in that** the inverter sets the choke current for a three-phase mode in accordance with the following equation

$$\widehat{I}_{L\_set} = 2 \cdot \frac{U_{batt} \cdot I_{batt\_set}}{\sqrt{3 \cdot \widehat{U}_{ss}}}$$

and for a single-phase mode in accordance with the following equation

$$\widehat{I}_{L\_set} = 2 \cdot \frac{U_{batt} \cdot I_{batt\_set}}{\widehat{U}_{ss}},$$

where

$I_{L\_set}$ = choke current
$U_{batt}$ = battery voltage
$I_{batt\_set}$ = battery setpoint charging current

**3.** Power supply device for carrying out the method according to Claim 1, **characterized in that** the power supply device comprises a connection device for connecting the power supply device to a power supply system (55, 56) and comprises switching elements (S50A, S50B, S50C, S50D, S50E, S50F, S50G, S50H, S50I, S50J) which connect the inverter (52) to the electrical machine (51) in a first type of mode (driving mode) and connect the inverter (52) to the power supply system (55, 56) by means of the connection device in a second type of mode (charging mode).

**4.** Power supply device according to one of the preceding claims, **characterized in that** it comprises a controller (58) for controlling the switching elements (S50A, S50B, S50C, S50D, S50E, S50F, S50G, S50H, S50I, S50J).

**5.** Power supply device according to one of the preceding claims, **characterized in that** the connection device selectively allows connection of the power supply device to a three-phase power supply system (55) or an AC power supply system (56).

**6.** Power supply device according to one of the preceding claims, **characterized in that** a choke (D4) is provided which, together with a half-bridge of the inverter (52), forms a DC voltage converter (71) which is connected between the inverter (52) and the storage device (54.1).

**7.** Power supply device according to one of the preceding claims, **characterized in that** the power supply device comprises a switching element (S50J) which is open in the driving mode and which is closed in the charging mode in order to connect the choke (D4) to a half-bridge of the inverter (52).

8. Power supply device according to one of the preceding claims, **characterized in that** a switching element (S50I) is provided in a connecting line between the inverter (52) and an EMC filter (53), with the switching element being closed in the driving mode and being open in the charging mode.

9. Use of the power supply device according to one of the preceding claims in an electric vehicle.

## Revendications

1. Procédé pour la commande d'un dispositif d'alimentation électrique pour au moins une machine électrique (51), comprenant au moins un dispositif d'accumulation pour de l'énergie électrique (Batterie 54.1) et comprenant un onduleur (52) incluant au moins une bobine (Inductance L), l'onduleur (52) étant prévu en double fonction pour la charge (Mode charge) du dispositif d'accumulation (Batterie 54.1) depuis un réseau électrique (55, 56) notamment fixe, à savoir un réseau à courant alternatif (WN) ou un réseau à courant triphasé (DN) avec lequel l'onduleur est relié par le biais de l'au moins une bobine, et pour l'alimentation d'une machine électrique (51) en mode déplacement avec du courant alternatif, et une puissance de charge de consigne étant prédéfinie pour le mode charge, **caractérisé en ce que** l'onduleur (52) règle le courant de bobine pour un fonctionnement triphasé conformément à l'équation suivante

$$\hat{I}_{L\_Soll} = 2 * \frac{P_{Batt\_Soll}}{\sqrt{3} * \hat{U}_{Netz}}$$

et pour un fonctionnement monophasé conformément à l'équation suivante

$$\hat{I}_{L\_Soll} = 2 * \frac{P_{Batt\_Soll}}{\hat{U}_{Netz}}$$

où

    $P_{Batt\_Soll}$ = puissance de charge de consigne
    $I_{L\_Soll}$ = valeur de crête du courant de consigne nominal ; courant de bobine.

2. Procédé selon la revendication 1, **caractérisé en ce qu'**un courant de consigne est prédéfini pour le mode charge et **en ce que** l'onduleur règle le courant de bobine pour un fonctionnement triphasé conformément à l'équation suivante

$$\hat{I}_{L\_Soll} = 2 * \frac{U_{Batt} \cdot I_{Batt\_Soll}}{\sqrt{3} * \hat{U}_{Netz}}$$

et pour un fonctionnement monophasé conformément à l'équation suivante

$$\hat{I}_{L\_Soll} = 2 * \frac{U_{Batt} \cdot I_{Batt\_Soll}}{\hat{U}_{Netz}}$$

où

    $\hat{I}_{L\_Soll}$ = courant de consigne de bobine
    $U_{Batt}$ = tension de la batterie
    $I_{Batt\_Soll}$ = courant de charge de consigne de la batterie.

3. Dispositif d'alimentation électrique pour mettre en oeuvre le procédé selon la revendication 1, **caractérisé en ce que** le dispositif d'alimentation électrique comprend un dispositif de raccordement pour relier le dispositif d'alimentation électrique avec un réseau électrique (55, 56) et des éléments de commutation (S50A, S50B, S50C, S50D, S50E, S50F, S50G, S50H, S50I, S50J) qui, dans un premier mode de fonctionnement (mode déplacement), relient l'onduleur (52) avec la machine électrique (51) et, dans un deuxième mode de fonctionnement (mode charge), relient l'onduleur (52) avec le réseau électrique (55, 56) par le biais du dispositif de raccordement.

4. Dispositif d'alimentation électrique selon l'une des revendications précédentes, **caractérisé en ce qu'**il comprend un contrôleur (58) pour la commande des éléments de commutation (S50A, S50B, S50C, S50D, S50E, S50F, S50G, S50H, S50I, S50J).

5. Dispositif d'alimentation électrique selon l'une des revendications précédentes, **caractérisé en ce que** le dispositif de raccordement permet, au choix, un raccordement du dispositif d'alimentation électrique à un réseau à courant triphasé (55) ou à un réseau à courant alternatif (56).

6. Dispositif d'alimentation électrique selon l'une des revendications précédentes, **caractérisé en ce qu'**il est prévu une bobine (D4) qui, conjointement avec un demi-pont de l'onduleur (52), forme un convertisseur de tension continue (71) qui est branché entre l'onduleur (52) et le dispositif d'accumulation (54.1).

7. Dispositif d'alimentation électrique selon l'une des revendications précédentes, **caractérisé en ce que** le dispositif d'alimentation électrique comprend un élément de commutation (S50J) qui est ouvert en mode déplacement et qui est fermé en mode charge afin de relier la bobine (D4) avec un demi-pont de l'onduleur (52).

8. Dispositif d'alimentation électrique selon l'une des revendications précédentes, **caractérisé en ce qu'**il est prévu un élément de commutation (S50I) dans une ligne de liaison entre l'onduleur (52) et un filtre CEM (53), l'élément de commutation étant fermé en mode déplacement et ouvert en mode charge.

9. Utilisation du dispositif d'alimentation électrique selon l'une des revendications précédentes dans un véhicule électrique.

Fig. 1

EP 2 385 909 B1

Fig. 2

31   32   33   WR

30

Fig. 3

Fig. 4

EP 2 385 909 B1

Fig. 5

Fig. 6

Fig. 7

EP 2 385 909 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10110615 A1
- DE 10119985 A1
- DE 102007043603
- DE 69617026 T2
- EP 0849112 A1
- EP 0603778 A1